# EUROPEAN PATENT APPLICATION

(11) **EP 1 384 844 A2**
(43) Date of publication of application: **28.01.2004**
(21) Application number: 03017065.8
(22) Date of filing: 25.07.2003
(51) Int. Cl.: E05B 65/20, H01Q 1/32, B60R 25/00, G07C 9/00

(54) **Door handle for a vehicle**

(30) Priority: 25.07.2002 JP 2002216977
(71) Applicant: Aisin Seiki Kabushiki Kaisha, Kariya-shi, Aichi-ken (JP)
(72) Inventor: Ieda, Kiyokazu, Chiryu-shi, Aichi-ken (JP); Murakami, Yuichi, Chiryu-shi, Aichi-ken (JP); Mushiake, Eiji, Chita-gun, Aichi-ken (JP)
(74) Representative: Leson, Thomas Johannes Alois, Dipl.-Ing.

(57) **Abstract**

A door handle for a vehicle includes a handle main body fixed to a vehicle door and possessing a housing portion at an opposite side of the vehicle door, an antenna housed in the housing portion so as to arrange an axis of the antenna to be substantially parallel to a longitudinal direction of the door handle main body, and s metal made cover for coating the housing portion from the opposite side of the vehicle door. The cover within an axial direction dimension of the antenna is arranged to be more distant from the vehicle door than the axis of the antenna.

## Description

### FIELD OF THE INVENTION

This invention generally relates to a door handle for use of a vehicle door opening/closing device capable of locking a vehicle door in response to closing operation of the vehicle door and capable of unlocking the vehicle door in response to opening operation of the vehicle door when a user is detected to be coming close to the vehicle.

### BACKGROUND OF THE INVENTION

A known keyless entry system (i.e. a smart entry system) suited for a vehicle door opening/closing device has been disclosed in a Japanese Patent Laid-Open Publication No. 5(1993)-106376. The disclosed smart entry system is able to detect whether a user carrying a portable station (i.e. a remote-controller) has come close to or been away from a vehicle door. The vehicle door can be hence automatically locked or unlocked in response to the detected result. This type of keyless entry system has been developed in order to enhance convenience for locking/unlocking the vehicle door and security thereof.

Such a smart entry system includes the portable station that is carried by the user and an onboard radio device which is mounted on the vehicle. The portable station includes a first signal-receiving means and a first signal-transmitting means. The first signal-receiving means receives a radio request signal transmitted from the onboard radio device. The first signal-transmitting means transmits a radio response signal in response to receiving of the radio request signal by the first signal-receiving means. The onboard radio device includes a second signal-transmitting means, a second signal-receiving means, and a controlling means. The second signal-transmitting- means transmits the radio request signal to the portable station for a predetermined time interval. The second signal-receiving means receives the radio response signal from the first signal-transmitting means of the portable station. The controlling means outputs a signal for unlocking the vehicle door in response to receiving of the radio response signal by the second signal-receiving means. On the other hand, the controlling means outputs a signal for locking the vehicle door in a predetermined time pass when the radio response signal is not received by the second signal-receiving means.

The second signal-transmitting means is generally housed in the door handle which is provided at the vehicle door outside the vehicle such that the radio request signal can be efficiently transmitted towards outside of the vehicle. This type of signal transmitting means housed in the door handle has been disclosed in a U.S. Patent No. 6,407,677B1, which corresponds to a Japanese Patent Laid-Open Publication No. 2000-196353, and an International Publication published as No. W099/19585. According to the disclosure therein, the transmitting means is an antenna for a device for low-frequency communication. More particularly, the transmitting means is a coil loop antenna which is configured with a ferrite core wound with a coil. A magnetic field is generated along an axial direction of the ferrite core by supplying electric current to the coil, thereby generating a radio wave as a signal.

Generally, the door handle has been coated with metal for decorating the door handle such that the vehicle is highly-finished. However, when the aforesaid antenna (i.e. the second signal-transmitting means) is housed in the door handle coated with the metal, a magnetic flux emitted from the antenna may not be sufficiently assured due to the metal having conductive properties. In this case, the radio wave, may not be able to be properly transmitted from the antenna to the outside of the vehicle.

A need thus exists to provide an improved vehicle door handle capable of assuring the magnetic flux emitted from the antenna housed in the door handle coated with metal.

### SUMMARY OF THE INVENTION

In light of foregoing, according to an aspect of the present invention, a door handle for a vehicle includes a handle main body fixed to a vehicle door and possessing a housing portion at an opposite side of the vehicle door and an antenna housed in the housing portion so as to arrange an axis of the antenna to be substantially parallel to a longitudinal direction of the door handle main body. The door handle for the vehicle characterized in that the door handle further includes a metal made cover for coating the housing portion from the opposite side of the vehicle door. The cover within an axial direction dimension of the antenna is arranged to be more distant from the vehicle door than the axis of the antenna.

It is preferable that a longitudinal direction dimension of the cover is defined to be greater than the axial direction dimension of the antenna and a ratio of a sectional area of the antenna vertical to the axial direction thereof to an axially projected area of the cover is defined, for example to be substantially equal to or greater than one to a hundred and twenty.

In the mean time, an entire portion of the cover can be positioned to be more distant from the vehicle door than the axis of the antenna.

It is still further preferable that the cover is not grounded.

### BRIEF DESCRIPTION OF THE DRAWING FIGURES

The foregoing and additional features and characteristics of the present invention will become more apparent from the following detailed description considered with reference to the accompanying drawing figures wherein:
FIG. 1 is a block view schematically illustrating a vehicle door opening/closing device provided with a keyless entry system according to an embodiment of the present invention;
FIG. 2 is a block view schematically illustrating a portable station used for the keyless entry system;
FIG. 3 is a side view illustrating a door handle;
FIG. 4 is an exploded perspective view for explaining main components of the vehicle door; and
FIG. 5 is a block view illustrating details of the door handle and a first oscillator illustrated in FIG. 1.

### DETAILED DESCRIPTION OF THE INVENTION

A preferred embodiment of the present invention will be described hereinbelow in detail with reference to the accompanying drawings.

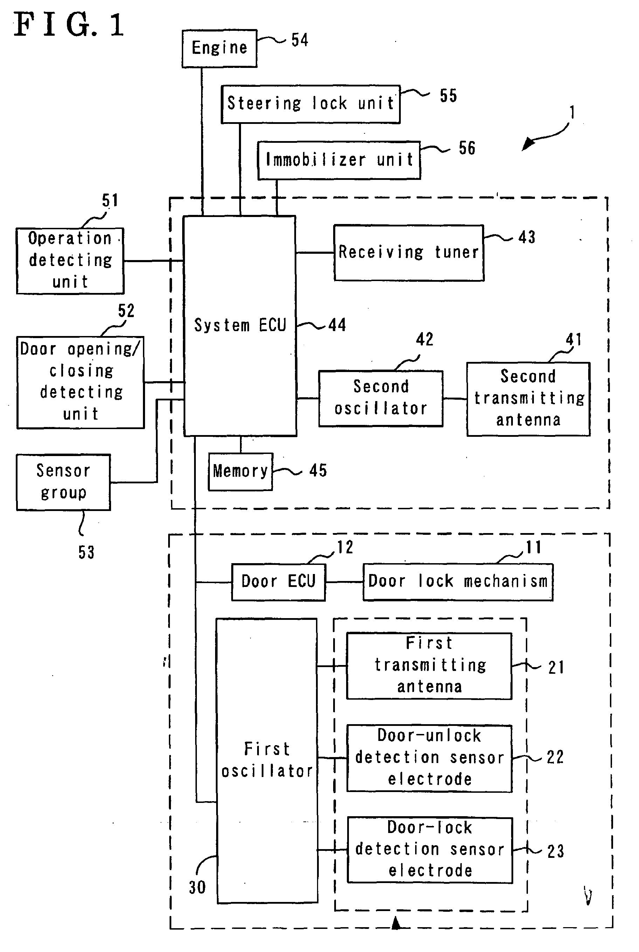

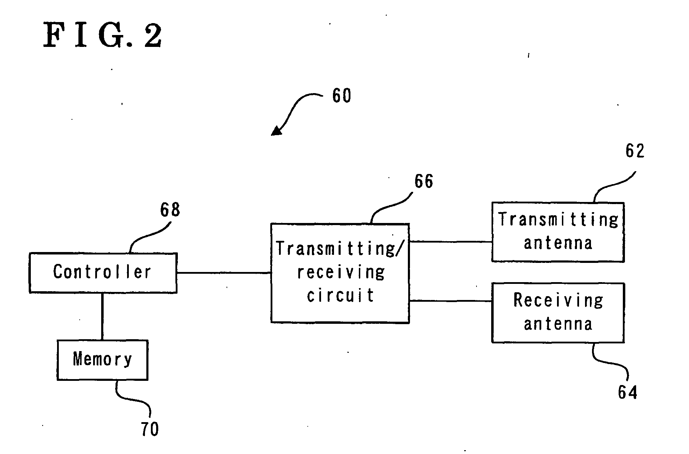

As illustrated in FIG. 1, a keyless entry system (i.e., a smart entry system) 1 judges whether a user carrying a portable station 60 such as a remote-controller (shown in FIG. 2) is coming close to the vehicle or moving way from the vehicle. When a door handle is manually operated while the user is coming closer to the vehicle, the vehicle door condition is switched between a locked condition and an unlocked condition by a door lock mechanism 11 mounted adjacent to the vehicle door. In this case, a vehicle key is not required for switching the vehicle door condition between the locked and unlocked conditions.

As illustrated in FIG.1, a door panel is provided with the door lock mechanism 11 operated for unlocking and locking the vehicle door, a door ECU 12 for controlling operation of the door lock mechanism 11, a door handle 20 fixed at the door panel outside the vehicle and embedding a first transmitting antenna 21 for communicating with a vehicle outside, and a first oscillator 30 connected with the first transmitting antenna 21 of the door handle 20. As described later, further embedded are in the door handle 20 a door-unlock detection sensor electrode 22 and a door-lock detection sensor electrode 23.

Provided are in the vehicle a second transmitting antenna 41 for communicating in the vehicle a second oscillator 42 connected with the second transmitting antenna 41, a receiving tuner 43, and a system ECU 44. The second transmitting antenna 41 can be provided at a portion such as a center consol, from which a radio wave can be radiated inside the vehicle. The system ECU 44 is connected to the second oscillator 42 and the receiving tuner 43. The receiving tuner 43 can be provided, for example in a vehicle inner mirror.

The system ECU 44 in the vehicle is connected to an operation detecting unit 51, a door opening/closing detecting unit 52, and a sensor group 53. The operation detecting unit 51 detects operations of various switches such as an ignition switch (not shown) and supplies a detection signal indicating the operation of the switch to the system ECU 44. The door opening/closing detecting unit 52 detects opening/closing operation of the vehicle door on a side of a driver seat (or each door of the vehicle) and supplies a detection signal to the system ECU 44. The sensor group 53 includes various sensors for detecting vehicle conditions such as a vehicle speed and a window opening/closing condition. These sensors supply detection signals to the system ECU 44, respectively. According to the embodiment of the present invention, the system 1 includes each ECU such as the system ECU 44 for controlling an entire system and the door ECU 12 for controlling the operation of the door lock mechanism 11. Alternatively, the ECUS 12 and 44 can be integrated as a single ECU.

The system ECU 44 in the vehicle is further connected to an engine 54, a steering lock unit 55, and an immobilizer unit 56. The steering lock unit 55 prohibits a steering operation by mechanically locking a steering wheel (not shown). The immobilizer unit 56 prohibits fuel supply to the engine 54 and further prohibits the ignition of the engine 54 for dishonest purposes. The ignition of the engine 54 can be controlled by an engine control portion (not shown) in the system ECU 44.

The system ECU 44 transmits a first request signal to the first oscillator 30. The first request signal is transmitted from the first transmitting antenna 21 to the portable station 60 as a vehicle outside request signal having a frequency, for example at 134 kHz. The system ECU 44 further transmits a second request signal to the second oscillator 42. The second request signal is transmitted from the second transmitting antenna 41 to the portable station 60 as a vehicle inside request signal having a frequency, for example at 134 kHz.

The receiving tuner 43 receives an ID information signal transmitted from the portable station 60. According to the embodiment of the present invention, the ID information signal has a frequency at 315 MHz. The ID information signal is received and demodulated by the receiving tuner 43 and is supplied to the system ECU 44. The system ECU 44 houses a memory 45 which contains a plurality of different codes stored therein such as a code for unlocking and locking the vehicle door, a code for starting the engine 54, and a transponder ID code. For example, the memory 45 is a nonvolatile memory such that contents stored in the memory 45 can be maintained even if power supply to the system ECU 44 is shut off.

As illustrated in FIG. 2, the portable station 60 is provided with a transmitting antenna 62 and a receiving antenna 64. The transmitting antenna 62 transmits the ID information signal having a frequency at 315 MHz to the vehicle. The receiving antenna 64 receives the request signal having the frequency at 134 kHz from the vehicle. The transmitting antenna 62 and the receiving antenna 64 are connected to a transmitting/receiving circuit 66 connected to a controller 68.

When the receiving antenna 64 of the portable station 60 receives the vehicle outside request signal transmitted from the vehicle, the received signal is demodulated in the transmitting/receiving circuit 66 and then supplied to the controller 68. The controller 68 transmits a code stored in a memory 70 to the transmitting/receiving circuit 66. The transmitting/receiving circuit 66 modulates the code including the ID information. The ID information signal having the frequency at 315 MHz is hence transmitted to the receiving tuner 43 in the vehicle.

Next, the description will be given for explaining an operation of the smart entry system 1. While the vehicle has been parked, the request signal is transmitted from the system ECU 44 to the first oscillator 30 in the door panel. The vehicle outside request signal having the frequency at 134 kHz is transmitted as the radio wave from the first transmitting antenna 21 to the vehicle outside. When the user carrying the portable station 60 comes close to the vehicle, the receiving antenna 64 of the portable station 60 receives the vehicle outside request signal. The received signal is demodulated in the transmitting/receiving circuit 66 and then supplied to the controller 68. The ID information signal having the frequency at 315 MHz is hence transmitted from the transmitting antenna 62 to the receiving tuner 43. The ID information signal is eventually transmitted from the receiving tuner 43 to the system ECU 44. Therefore, the system ECU 44 can recognize that the portable station 60 has come close to the vehicle. The system ECU 44 then selects a door unlock mode in order to identify the door opening operation by the user in response to detection of the user coming close to the vehicle.

In the door unlock mode, when the door handle 20 is gripped by the user, the door-unlock detection sensor electrode 22 transmits a sense signal to the system ECU 44 via the first oscillator 30. The system ECU 44 processes the sense signal and transmits a door unlock signal to the door ECU 12, whereby the door lock mechanism 11 is operated for unlocking the vehicle door.

Next, the following description will be given for explaining the operation of the smart entry system 1 when the user moves from the vehicle inside to the vehicle outside. When the user is inside the vehicle; the second request signal is transmitted from the system ECU 44 to the second oscillator 42. The vehicle inside request signal is then transmitted as a radio wave from the second transmitting antenna 41 to the vehicle inside. When the portable station 60 is inside the vehicle, the vehicle inside request signal from the second transmitting antenna 41 is received by the portable station 60 inside the vehicle and the lD information signal from the transmitting antenna 62 of the portable station 60 is received by the receiving tuner 43. When the user is moved to the vehicle outside from the aforementioned condition that the portable station 60 is inside the vehicle, the portable station 60 can not receive the vehicle inside request signal from the second transmitting antenna 41 any more. In this case, the ID information signal based upon the vehicle inside request signal can not be transmitted to the receiving tuner 43 any more. At this point, the system ECU 44 identifies that the portable station 60 was moved from the vehicle inside to the vehicle outside, i.e. identifies that the user moved from the vehicle inside to the vehicle outside. The system ECU 44 then selects a door lock mode in response to the closing operation of the vehicle door.

In the door lock mode, when the door-lock detection sensor electrode 23 is turned on, the door-lock detection sensor electrode 23 transmits a lock signal to the system ECU 44 via the first oscillator 30. The system ECU 44 processes the lock signal and transmits the first request signal to the first oscillator 30. The first transmitting antenna 21 then transmits the vehicle outside request signal as the radio wave to the vehicle outside. At this point, the user carrying the portable station 60 is close to the vehicle door outside such that the ID information signal can be transmitted from the portable station 60 to the receiving tuner 43. The received signal by the receiving tuner 43 is transmitted to the system ECU 44. As described above, when the system ECU 44 identifies that the user carrying the portable station 60 is outside the vehicle, the system ECU 44 transmits a door lock signal to the door ECU 12 in response to the contact of the user with the door handle 20, whereby the door lock mechanism 11 is operated for locking the vehicle door.

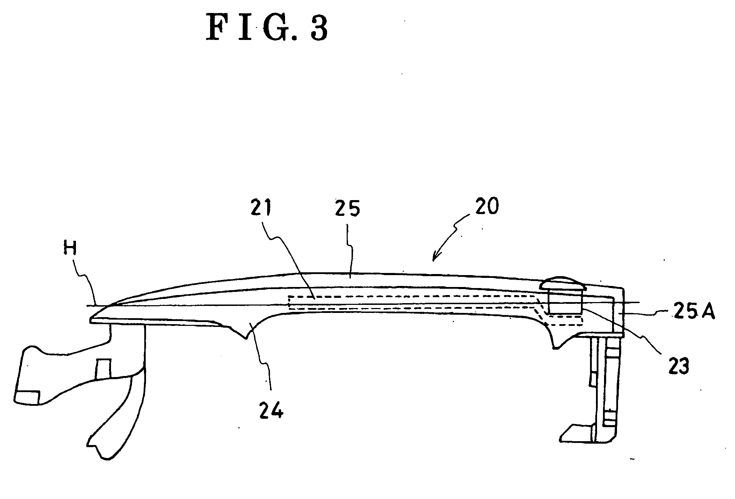

Next, the following description will be given for explaining details of the first oscillator 30 and the door handle 20 with reference to FIGS. 3, 4, and 5. As illustrated in FIG. 3, the door handle 20 of a grip type according to the embodiment of the present invention is mounted to an outer door panel of the door and the vehicle door can be opened when a grip portion GP at a central portion of the door handle 20 is gripped. Alternatively, the door handle 20 is not limited to the grip type and a different type of the door handle can be applicable.

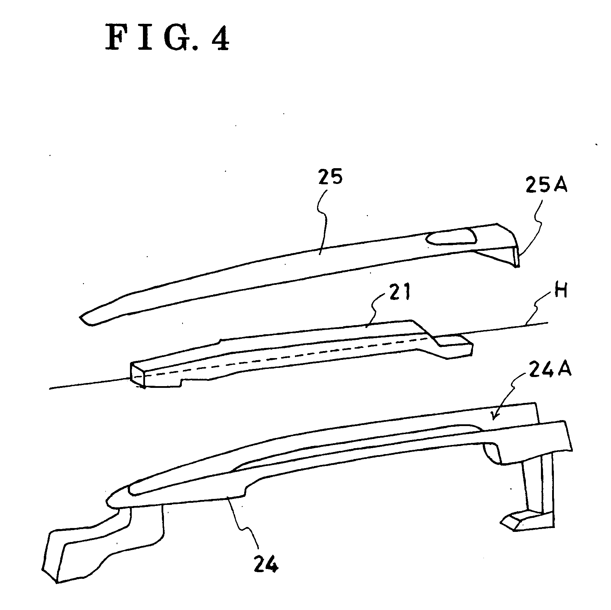

As illustrated in FIGS. 3 and 4, the door handle 20 is provided with a resin made handle main body 24 and a metal made cover 25. The resin made handle main body 24 is fixed to the vehicle door and possesses a housing portion 24A, of which surface of an opposite side of the vehicle door opens. The metal made cover 25 coats the housing portion 24A from the opposite side of the vehicle door. Housed is in the housing portion 24A the first transmitting antenna 21 of which axis H is arranged to be approximately parallel to a longitudinal direction of the handle main body 24. The door-unlock detection sensor electrode 22 is molded-in the handle main body 24 and the door-lock detection sensor electrode 23 is disposed between an end portion of the first transmitting antenna 21 and the cover 25. According to the embodiment of the present invention, the cover 25 is not grounded so as to restrain reducing a magnetic flux radiated from the first transmitting antenna 21 as much as possible. In this case, the entire portion of the cover 25 can act as a sensor.

Each longitudinal and width direction dimension of the cover 25 is designed to be greater than each axial direction and width direction dimension of the first transmitting antenna 21. The cover 25 within the axial direction dimension of the first transmitting antenna 21 is positioned to be more distant from the vehicle door (i.e. at an upper side in FIG. 3) than the axis H of the first transmitting antenna 21. Therefore, the magnetic flux radiated from the first transmitting antenna 21 can be restrained from being cut off due to a metal component contained in the cover 25, thereby enabling to assure the magnetic flux required for the smart entry system. That is, a flat surface vertical relative to a sheet illustrating FIG. 3 and including the axis H of the first transmitting antenna 21 is positioned below the cover 25 such that the magnetic flux radiated from the first transmitting antenna 21 can be assured.

As illustrated in FIG. 3, an end portion 25A of the cover 25 at the right-hand side in FIG. 3 is defined to be upright relative to the axis H of the first transmitting antenna 21. The end portion 25A of the cover 25 is defined to be more adjacent to the vehicle door than the axis H of the first transmitting antenna 21. In this case, according to the embodiment of the present invention, an axially projected area of the cover 25 (i.e. an area projected in the longitudinal direction of the cover 25) is denoted with a symbol "SS". A sectional area of the first transmitting antenna 21 vertical to the axial direction thereof is denoted with a symbol "S". A relationship between the projected area SS and the sectional area S is designed to satisfy the condition of S / SS > 1 / 120. Therefore, the reduced amount of the magnetic flux radiated from the first transmitting antenna 21 can be adjusted to be substantially equal to or less than 1 /(√2) of the magnetic flux radiated from the first transmitting antenna 21 when the metal made cover 25 is not utilized. According to the embodiment of the present invention, the projected area SS of the cover 25 is approximately 400 mm² and the sectional area S of the first transmitting antenna 21 is approximately 12 mm². A ratio of both areas S / SS is 0.03. As described above, the magnetic flux radiated from the first transmitting antenna 21 can be restrained from being reduced.

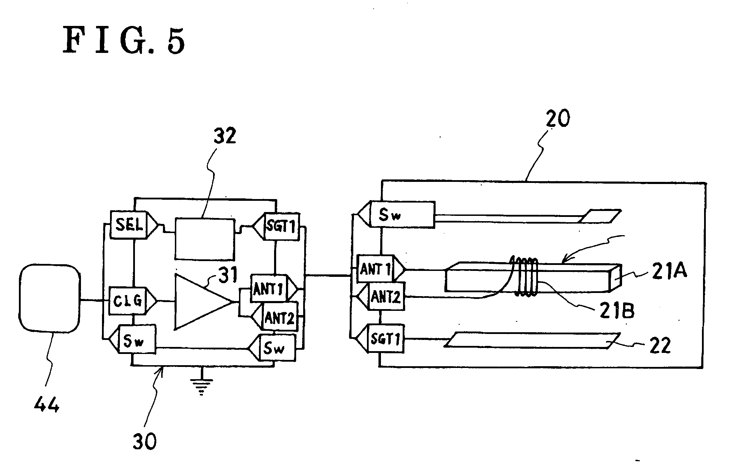

As illustrated in FIG. 5, the first oscillator 30 includes a transmitting amplifier 31 and a sensor electrode 32. The vehicle outside request signal outputted from the system ECU 44 is inputted to a CLG terminal, modulation-amplified by the transmitting amplifier 31, and transmitted to the first transmitting antenna 21 via ANT1 and ANT2 terminals. The vehicle outside request signal received by the first transmitting antenna 21 is transmitted as the radio wave to the vehicle outside. The signal outputted from the system ECU 44 in the door lock mode and the door unlock mode is inputted to a SEL terminal such that the sensor electrode driver 32 connected to the SEL terminal is activated. The sensor electrode driver 32 activates detection by the door-unlock detection sensor electrode 22 via an STG1 terminal. An on/off signal from the door-lock detection sensor electrode 23 is transmitted to the system ECU 44 via an SW terminal. The first transmitting antenna 21, and the detection sensor electrodes 22, 23 are electrically connected to the respective terminals.

The first transmitting antenna 21 includes a ferrite core 21A possessing a rectangular solid and a coil 21B wounded around the ferrite core 21A at a right angle relative to a longitudinal direction of the ferrite core 21 A. The door-lock detection sensor electrode 23 is an on/off switch and is embedded adjacent to an end portion of the door handle 20 (at a right side in FIG. 4). When the user closed the vehicle door, the door-lock detection sensor electrode 23 can detect it by being switched on or off. The door-unlock detection sensor electrode 22 is a capacitance type sensor electrode and is embedded in a backside of the door handle 20 (in a lower side in FIG.4). When the user opens the vehicle door, the door-unlock detection sensor electrode 22 can detect the manual operation of the door handle 20, i.e. the contact with the door handle 20. According to the embodiment of the present invention, the door lock mechanism 11 is operated to lock the vehicle door in response to the on operation of the door-lock detection sensor electrode 23. However, the present invention is not limited only to the above-described preferred embodiment. For example, the door-lock detection sensor electrode 23 can be a capacitance type sensor electrode which is the same as the door-unlock detection sensor electrode 22.

Next, the following description will be given for explaining operation of the first oscillator 30 in response to the opening/closing operation of the vehicle door.

When the user opens the vehicle door, the door handle 20 is gripped and pulled outwardly by the hand of the user. In this case, the hand of the user becomes in contact with the backside of the vehicle door. Therefore, the door-unlock detection sensor electrode 22 provided at the backside of the vehicle door detects the opening operation of the vehicle door. In this case, the change of the signal transmitted from the SGT1 terminal is detected by the sensor electrode driver 32. The sensor electrode driver 32 then transmits the sense signal to the system ECU 44 via the SEL terminal. Therefore, the door lock mechanism 11 can be operated to unlock the vehicle door. Further, when the user closes the vehicle door, the system ECU 44 identifies the closing operation of the vehicle door in response to the on operation of the door-lock detection sensor electrode 23. Therefore, the door lock mechanism 11 is operated to lock the vehicle door.

As described above, the present invention Is not limited only to the above-described preferred embodiment. Alternatively, when the entire portion of the cover 25 is positioned to be more distant from the vehicle door than the axis H of the first transmitting antenna 21 relative to the vehicle door, the ratio of the sectional area S of the first transmitting antenna 21 to the projected area SS of the cover 25 is not required to be set, for example substantially equal to or greater than the ratio of 1 / 120. In this case, the magnetic flux radiated from the first transmitting antenna 21 can be effectively restrained from being reduced due to the metal component contained in the cover 25 in the same manner as the above-described preferred embodiment of the present invention.

According to the present invention, the metal made cover 25 within the axial direction dimension of the first transmitting antenna 21 is positioned to be more distant from the vehicle door than the axis H. Therefore, the magnetic flux radiated from the first transmitting antenna 21 can be effectively restrained from being reduced due to the metal component contained in the cover 25. Therefore, the door handle possessing the metal made cover 25 for turning the door handle highly-finished can be employed for the keyless entry system suited for the vehicle door opening/closing device.

A door handle for a vehicle includes a handle main body fixed to a vehicle door and possessing a housing portion at an opposite side of the vehicle door, an antenna housed in the housing portion so as to arrange an axis of the antenna to be substantially parallel to a longitudinal direction of the door handle main body, and s metal made cover for coating the housing portion from the opposite side of the vehicle door. The cover within an axial direction dimension of the antenna is arranged to be more distant from the vehicle door than the axis of the antenna.

## Claims

1. A door handle for a vehicle comprising a handle main body (24) fixed to a vehicle door and possessing a housing portion (24A) at an opposite side of the vehicle door, and an antenna (21) housed in the housing portion (24A) so as to arrange an axis of the antenna (21) to be substantially parallel to a longitudinal direction of the door handle main body (24), the door handle for the vehicle **characterized in that** the door handle further comprises a metal made cover (25) for coating the housing portion (24A) from the opposite side of the vehicle door, and the cover within an axial direction dimension of the antenna (21) is arranged to be more distant from the vehicle door than the axis of the antenna (21).

2. A door handle for a vehicle according to claim 1, wherein a longitudinal direction dimension of the cover (25) is defined to be greater than the axial direction dimension of the antenna (21) and a ratio of a sectional area of the antenna (21) vertical to the axial direction thereof to an axially projected area of the cover (25) is defined to be substantially equal to or greater than one to a hundred and twenty.

3. A door handle for a vehicle according to claim 1, wherein a longitudinal direction dimension of the cover (25) is defined to be greater than the axial direction dimension of the antenna (21) and an entire portion of the cover is positioned to be more distant from the vehicle door than the axis of the antenna (21).

4. A door handle for a vehicle according to any of the preceding claims, wherein the cover (25) is not grounded.
